# EUROPEAN PATENT APPLICATION

(11) **EP 1 978 475 A1**
(43) Date of publication of application: **08.10.2008**
(21) Application number: 07105678.2
(22) Date of filing: 04.04.2007
(51) Int. Cl.: G06Q 10/00

(54) **A commodity logistics service system and a counterfeit-impeding method thereof**

(71) Applicant: Hsiao, Cheng-Yuan, Beitou, 112 Taipai City (TW)
(72) Inventor: Hsiao, Cheng-Yuan, Beitou, 112 Taipai City (TW)
(74) Representative: Viering, Jentschura & Partner

(57) **Abstract**

A commodity logistics service system and a counterfeit-impeding method thereof are disclosed. The present invention solves the problem of the prior art that lacks an impeding counterfeit function. The present invention provides a commodity logistics service system. The authorizing module of the commodity logistics service system has at least one database unit and an authorizing and authenticating unit. The database unit stores the electronic tags of all commodities, and the authorizing and authenticating unit records the legal commodity information. The present invention utilizes the commodity management unit of the brand module, the authorizing and authenticating unit of the authorizing module, and the mentioned commodity recording method to impede the counterfeiting of a commodity.

## Description

### BACKGROUND OF THE INVENTION

### 1. Field of the Invention

The present invention relates to a commodity logistics service system and a counterfeit-impeding method thereof. In particular, this invention relates to a commodity logistics service system for managing legal goods between consumers, brand dealers, manufacturers, and logistic dealers (including wholesalers, distributors and retailers, etc.), and a counterfeit-impeding method for managing counterfeit goods in these multiple channels.

### 2. Description of the Related Art

Under the current commodity logistics management system, commodity information is generally recorded manually or via a bar-code. Because the information cannot be directly provided to consumers, consumers merely acquire the required information by phone or e-mail. In order to provide a handy commodity logistics management, a lot of commodity logistics management systems that combine hardware and software have been developed. For example, a commodity logistics management system that utilizes RFID technology has been developed.

For the RFID system of the prior art, an RFID reader is located at a proper location, the RFID tags are pasted onto goods, and the information in the RFID tags is stored in a database in the RFID system. When a commodity with a RFID tag is moved, the RFID reader induces the RFID tag and it updates the movement information to a control server of the RFID system. Then, the control server can transmit the movement information to the inquiring person via the Internet. Thereby, consumers, manufacturers, and brand dealers know whereabouts and other salient information about the goods.

However, although the RFID system of the prior art can monitor the movement of goods, it still cannot prevent a pirate commodity from being sneaked in the commodity logistics management system.

### SUMMARY OF THE INVENTION

In order to solve the above problem, the present invention provides a commodity logistics service system and a counterfeit-impeding method thereof.

One particular aspect of the present invention is to provide a commodity logistics service system for managing legal goods between consumers, brand dealers, manufacturers, and logistic dealers (wholesaler, distributor, retailer, and etc), and a counterfeit-impeding method for managing counterfeit goods in these multiple channels.

The commodity logistics service system manages the logistical information of goods with an electronic tag and impedes counterfeit commodities via the Internet. The commodity logistics service system includes an authorizing module, a brand module, a manufacturing module, a selling module, and a consumer module. The authorizing module includes a first accessing control unit, a database unit, and an authorizing and authenticating unit. The database unit stores information about the electronic tag of commodities, account information, registering information, commodity logistical information, and etc. The authorizing and authenticating unit authorizes and authenticates the commodities and impedes counterfeit commodities. The brand module includes a second accessing control unit, a commodity management unit, a manufacturing management unit, a consumer management unit, a sale record unit, and an identification service unit. The information generated from the second accessing control unit, the commodity management unit, the manufacturing management unit and the consumer management unit is a reference for the authorizing and authenticating unit to authorize and authenticate commodities. The manufacturing module includes a quality control unit, and a stock management unit. The manufacturing module receives orders from the manufacturing management unit to produce the commodity, records commodities that have been passed quality examination by the quality control unit in the stock management unit, and registers the quality check passed commodities in the authorizing and authenticating unit and the manufacturing management unit. The selling module includes an Electronic Article Surveillance (EAS) unit, and a commodity registering unit. The commodity registering unit allows authorized and authenticated commodities to register when sale is made. The consumer module includes an identification service unit that lets the consumer check whether the commodity is legal or not by connecting to the brand module via the Internet.

The counterfeit-impeding method of the commodity logistics service system includes issuing an information regarding a manufacturing order and electronic tags to a stock management unit of a manufacturing module, registering the quality check passed commodity (QC passed commodity) that the number of registered commodity has not surpassed manufacturing order in an authorizing and authenticating unit of an authorizing module and a manufacturing management unit of a brand module, checking whether QC passed commodity is legally registered or not, shipping the QC passed and registered commodity to a commodity management unit of the brand module for storage, checking whether the commodity stored in the commodity management unit is legally registered or not, storing the commodity to a commodity stock information unit of a selling module and registering the commodity in the commodity registering unit when/after a commodity is sold; sending an inquiry to determine whether the commodity is legally registered or not, determining whether the commodity belongs to a quantity-limited commodity or not, and executing the check-out process.

For further understanding of the invention, reference is made to the following detailed description illustrating the embodiments and examples of the invention. The description is only for illustrating the invention and is not intended to be considered limiting of the scope of the claim.

### BRIEF DESCRIPTION OF THE DRAWINGS

The drawings included herein provide a further understanding of the invention. A brief introduction of the drawings is as follows:
FIG. 1 is a schematic diagram of the commodity logistics service system of the present invention;
FIG. 2 is a schematic diagram of a relationship between the authorizing module and the commodity of the present invention;
FIG. 3 is a schematic diagram of a relationship between the authorizing module and the commodity, and the manufacturing module of the present invention;
FIG. 4 is a schematic diagram of a relationship between the brand module and the commodity, and the manufacturing module of the present invention;
FIG. 5 is a schematic diagram of a relationship between the selling module and the commodity, the consumer module, the authorizing module, and the manufacturing module of the present invention;
FIG. 6 is a schematic diagram of a relationship between the consumer module and the authorizing module, the manufacturing module, the brand module, and the selling module of the present invention; and
FIG. 7 is a flow chart of the counterfeit-impeding method of the commodity logistics service system of the present invention.

### DETAILED DESCRIPTION OF THE PREFERRED EMBODIMENTS

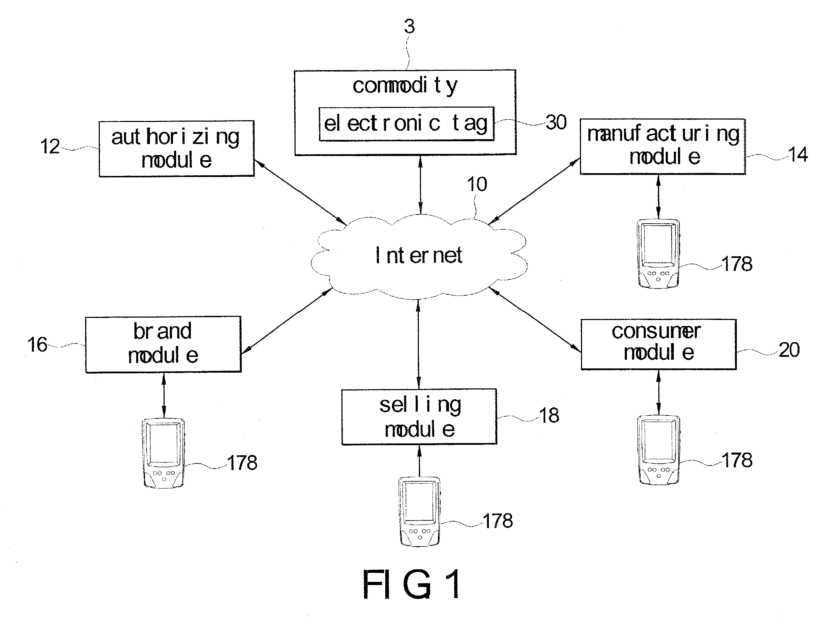

Reference is made to FIG. 1, which shows a schematic diagram of the commodity logistics service system of the present invention. The commodity logistics service system manages the logistical information of goods with an electronic tag and impedes counterfeit goods via the Internet. The commodity logistics service system includes a commodity 3 with an electronic tag 30, an Internet 10, an authorizing module 12, a manufacturing module 14, a brand module 16, a selling module 18, and a consumer module 20.

The authorizing module 12 is connected with the manufacturing module 14, the brand module 16, the selling module 18, and the consumer module 20 via the Internet 10. The authorizing module 12 can be an authorizing server. The manufacturing module 14 can be a server located at a manufacturing terminal. The brand module 16 can be a server located at a brand terminal. The selling module 18 can be a server located at a selling terminal. All authorizing information from the manufacturing module 14, the brand module 16, the selling module 18, and the consumer module 20 are sent to the authorizing module 12.

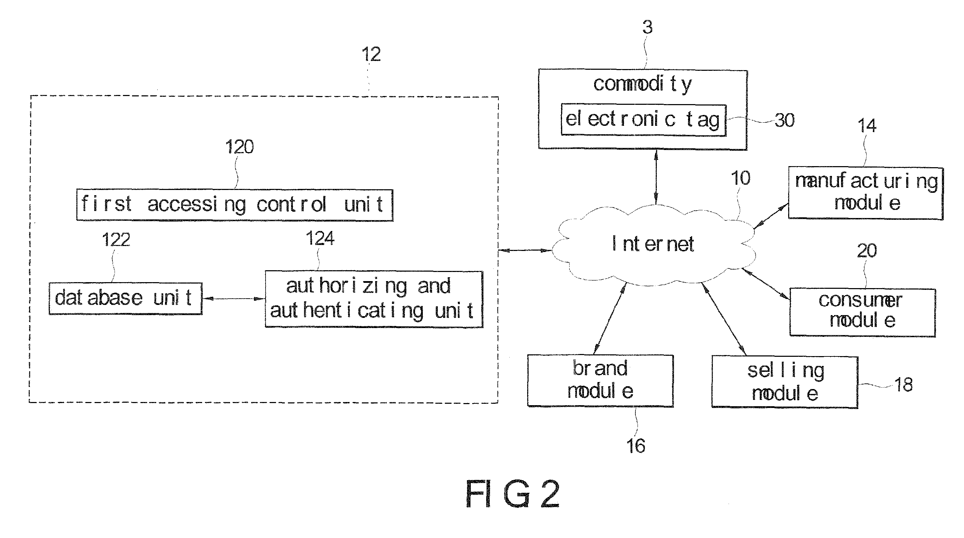

The present invention uses the schematic diagrams to illustrate the relationships between the modules and their operating processes. Reference is made to FIG. 2, which shows a schematic diagram of a relationship between the authorizing module and the commodity of the present invention. The authorizing module 12 includes a first accessing control unit 120, a database unit 122, and a authorizing and authenticating unit 124. The first accessing control unit 120 provides an account management function and a register management function to the manufacturing module 14, the brand module 16, and the selling module 18. The database unit 122 stores the information of the electronic tag 30 of the commodity 3, account information, registering information, commodity logistical information, and etc. The authorizing and authenticating unit 124 authorizes and authenticates the commodity 3 for impeding counterfeiting commodity 3. When the authorizing and authenticating unit 124 authorized the QC passed commodity 3, the authorizing and authenticating unit 124 will check whether the electronic tag 30 pasted on the commodity 3 has been authorized or registered. If the electronic tag 30 pasted on the QC passed commodity 3 has been authorized or registered, the authorizing process would be terminated. If the authorizing and authenticating unit 124 authorizes the QC passed commodity 3 to register, encrypted authentication codes will generate and store in the database unit 122, authorizing and authenticating unit 124, and the electronic tag 30 of commodity 3. The commodity logistical information (such as commodity manufacturing, shipping, and dealing information), the information of the electronic tag 30, the commodity register information, and the commodity authentication code are stored in the authorizing and authenticating unit 124. The information in the authorizing and authenticating unit 124 is synchronously processed with the database unit 122. The authorizing and authenticating unit 124 determines whether the commodity 3 is legal or not based on authorization and authentication of manufacturing orders in the manufacturing module 14, information of commodity stored in the electronic tag 30 of commodity 3 and in the database unit 122, and the commodity logistical information. In addition, the authorizing and authenticating unit 124 could embed in an electronic portable device that has synchronized partial database information from database unit 122 to perform the legal check offline.

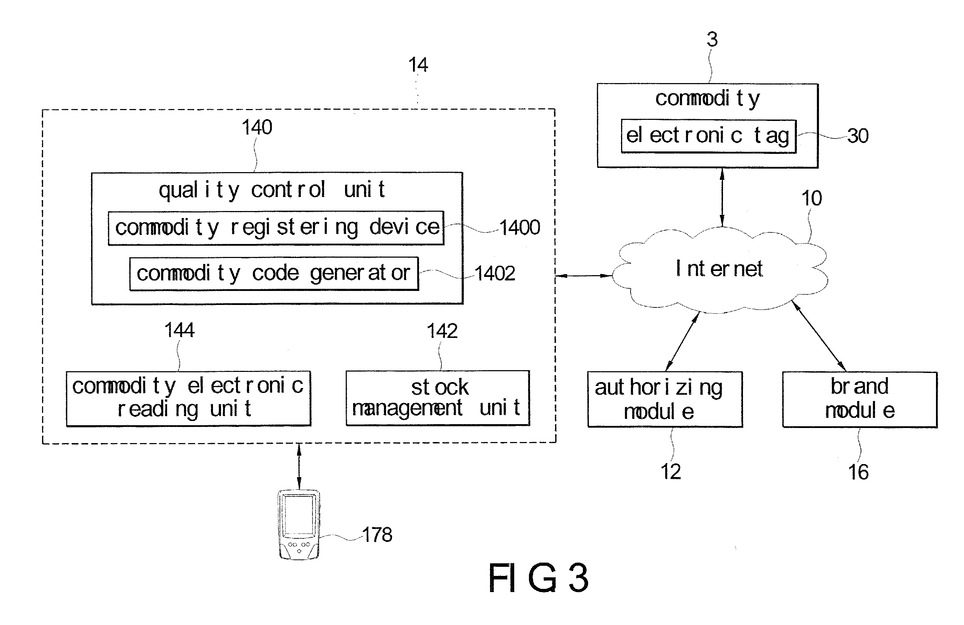

Reference is made to F1G. 3, which shows a schematic diagram of a relationship between the authorizing module and the commodity, and the manufacturing module of the present invention. The manufacturing module 14 includes a quality control unit 140, a stock management unit 142, and a commodity electronic reading unit 144. The manufacturing module 14 receives orders from the brand module 16 to produce the commodity 3. The quality control unit 140 has two functions. One is to check whether each of the electronic tags sent from the brand module 16 is workable or not. Another is to execute the recording processes and the authorizing & registering processes after the commodity 3 with a good electronic tag 30 has passed quality examination by the quality control unit 140. The quality control unit 140 also stores the information of the order and a commodity total quantity controlling information generated from the information of the order. The commodity total quantity controlling information controls the total quantity of the commodity that will be produced. When the quality control unit 140 detects that the electronic tag 30 is bad, the electronic tag 30 is killed and the information of the electronic tag 30 is transmitted to the brand module 16 via the Internet 10. The brand module 16 replaces the electronic tag 30 and resends it to the manufacturing module 14.

The electronic tag 30 that has been passed quality examination by the quality control unit 140 is pasted on the manufactured commodity 3. The information of electronic tag 30 pasted on the QC passed commodity 3 is recorded in the stock management unit 142 and is registered in the authorizing and authenticating unit 124 and in the manufacturing management unit 164. The stock management unit 142 stores the order information, the shipment status, and the stock status. When the commodity 3 with the electronic tag 30 is registered, the quality control unit 140 will check whether the number of the registered commodity 3 surpasses total quantity registration control limit. If the quantity of the registered commodity 3 is larger than the total quantity registration control limit, the registering process cannot execute. The quality control unit 140 includes a commodity registering device 1400 and a commodity code generator 1402. The quality control unit 140 registers and generates a commodity code for each commodity 3 that has been passed the quality examination by the quality control unit 140.

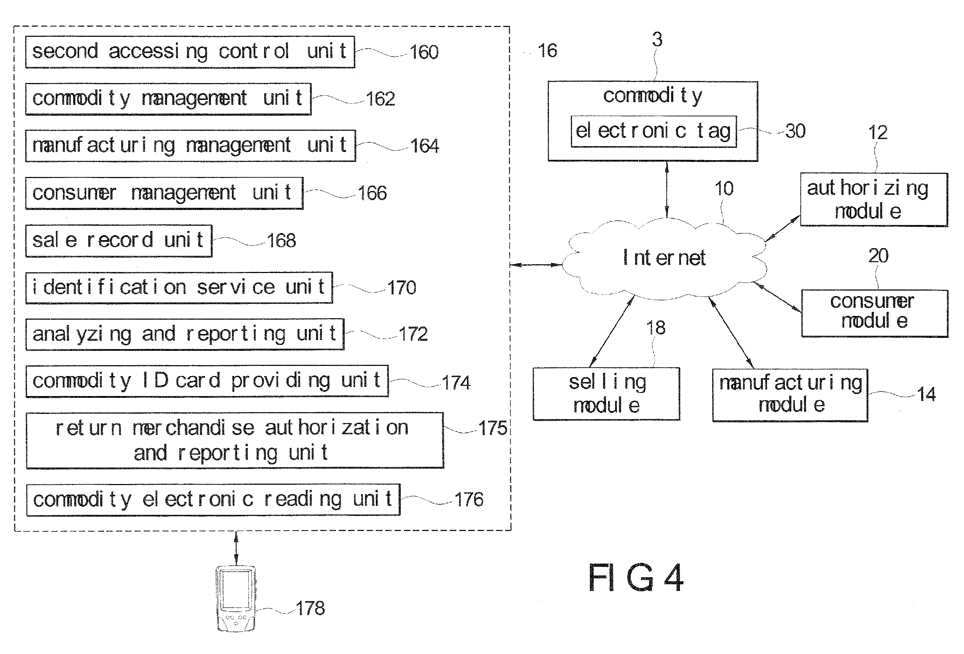

Reference is made to FIG. 4, which shows a schematic diagram of a relationship between the brand module and the commodity, and the manufacturing module of the present invention. The brand module 16 includes a second accessing control unit 160, a commodity management unit 162, a manufacturing management unit 164, a consumer management unit 166, a sale record unit 168, an identification service unit 170, an analyzing and reporting unit 172, a commodity ID card providing unit 174, a return merchandise authorization and reporting unit 175, a commodity electronic reading unit 176, and a portable electronic device 178. The information generated from the accessing control unit 160, the commodity management unit 162, the manufacturing management unit 164, and the consumer management unit 166 is a reference for the identification service unit 170.

The second accessing control unit 160 of the brand module 16 maintains, adds, and deletes the account of the manufacturing module 14 and the selling module 18. The second accessing control unit 160 also manages the account application for the consumer module 20. The commodity management unit 162 stores the information of the commodity list and profile, and the stock, etc. The commodity management unit 162 provides an adding and editing function for the commodity 3 profile. When the commodity management unit 162 has a new commodity 3, a pair of encrypted keys for the new commodity 3 is also generated. One encrypted key is transmitted to the manufacturing module 14 to generate an item for the commodity 3. Another encrypted key is transmitted to the authorizing module 12 to let the consumer check whether the commodity 3 is legal or not.

The commodity profile of the commodity management unit 162 stores image data for each registered commodity 3, the information of the electronic tag 30 corresponding to each registered commodity 3, and the specification of the commodity 3, etc. When the electronic tag 30 of a legal commodity 3 is stolen or illegally placed onto a pirate commodity 3, the pirate commodity 3 is not a legal product. When the owner of the pirate commodity 3 sells the pirate commodity 3, the buyer reads the information in the electronic tag 30 of the pirate commodity 3 to execute the verification process for checking whether the electronic tag 30 of the pirate commodity 3 is legal or not by the authorizing and authenticating unit 124 of the authorizing module 12. Because the electronic tag 30 of the pirate commodity 3 has been legally verified, the buyer would think the electronic tag 30 of the pirate commodity 3 is legal. However, at this time, the buyer also can obtain the image data of the legal commodity 3 that corresponds to electronic tag 30 stored in the commodity profile of the commodity management unit 162. Thereby, the buyer can judge the legalness of the commodity 3 with legal electronic tag 30. The manufacturing management unit 164 stores the information of orders and generates a production order request based on vendor's purchase order.

The consumer management unit 166 manages the register of the consumer and analyzes the selling status of the commodity 3. The sale record unit 168 stores the order status of the commodity 3 and the selling status. The analyzing and reporting unit 172 includes a market analyzing function and a commodity information reporting function. The analyzing and reporting unit 172 analyzes the information of the sale record unit 168 to help marketing and product plan by understanding product segmentation, customer group, sales distribution, sales cycle, purchase behavior of consumers, and other sales activities. The analyzing and reporting unit 172 reports the daily sale information of the commodity 3. The brand module 16 provides a customized customer service for a specific customer group according to the market analyzing function. The commodity ID card providing unit 174 makes a commodity ID card for the quantity-limited commodity 3. The commodity ID card has a pair of identification information. One is an electronic tag 30 of the commodity 3. Another is a quantity-limited commodity tag. The return merchandise authorization and reporting unit 175 deals with the return merchandise authorization process according to the item of the commodity 3 and the cause of return merchandise authorization from the customer module 20.

The portable electronic device 178 stores a database with the legal registering information of the commodity 3. The database is stored in a memory. The portable electronic device 178 can be a PDA, an information collector, or a smart cell phone etc. The brand module 16 utilizes the portable electronic device 178 to check whether the commodity 3 in the manufacturing module 14, the brand module 16, and the selling module 18 is legally registered or not.

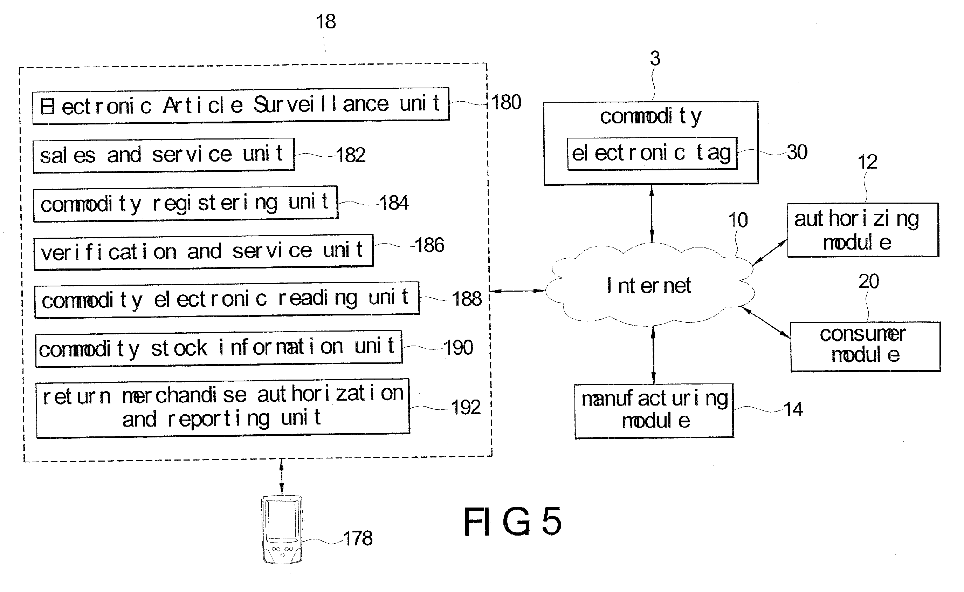

Reference is made to FIG. 5, which shows a schematic diagram of a relationship between the selling module and the commodity, the consumer module, the authorizing module, and the manufacturing module of the present invention. The selling module 18 includes an Electronic Article Surveillance unit 180, a sales and service unit 182, a commodity registering unit 184, a verification and service unit 186, a commodity electronic reading unit 188, a commodity stock information unit 190, and a return merchandise authorization and reporting unit 192. Firstly, the selling module 18 sends an order requesting command to the sale record unit 168 of the brand module 16. The brand module 16 transmits the QC passed commodity 3 to the selling module 18 and stores the commodity 3 in the commodity stock information unit 190. After the commodity 3 stored in the selling module 18 is sold, the sale information is transmitted to the sales and service unit 182, database unit 122, and the authorizing and authenticating unit 124 of the authorizing module 12. The Electronic Article Surveillance unit 180 prevents the commodity 3 from being stolen by utilizing the detection algorithm in the electronic tag 30 of the commodity 3 and the sensor alarm gateway.

When the customer module 20 receives the commodity 3 from the selling module 18, the commodity electronic reading unit 188 reads the information of the electronic tag 30 of the commodity 3, sends the information of the electronic tag 30 of the commodity 3 to the commodity registering unit 184 to register the commodity 3, and sends the information to the sale record unit 168 of the brand module 16 via the Internet 10 to record the commodity 3 is sold. Finally, the verification and service unit 186 provides a commodity ID card with a pair of identification information to the customer module 20. The return merchandise authorization and reporting unit 192 deals with the return merchandise authorization process according to the defect problem of the commodity 3 and the cause of return from the customer module 20. When the customer module 20 receives the commodity 3 from the selling module 18 via an abnormal process (without a check-out process), the Electronic Article Surveillance unit 180 issues an alarm signal to drive an alarm (not shown in the figure) or transmit the alarm signal to a police station (not shown in the figure) via the Internet 10.

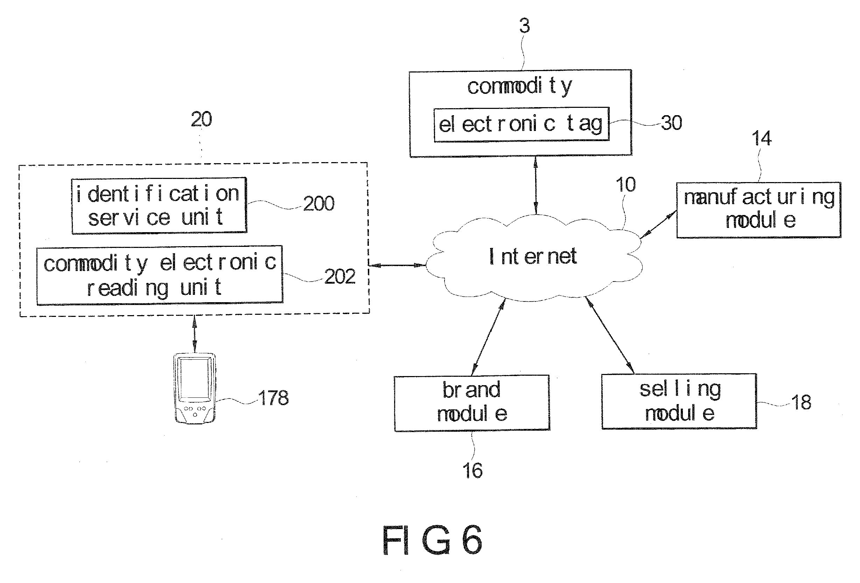

Reference is made to FIG. 6, which shows a schematic diagram of a relationship between the consumer module and the authorizing module, the manufacturing module, the brand module, and the selling module of the present invention. The consumer module 20 includes an identification service unit 200, and a commodity reading unit 202. The consumer can check whether the commodity 3 is legal or not by connecting to the brand module 16 via the Internet 10.

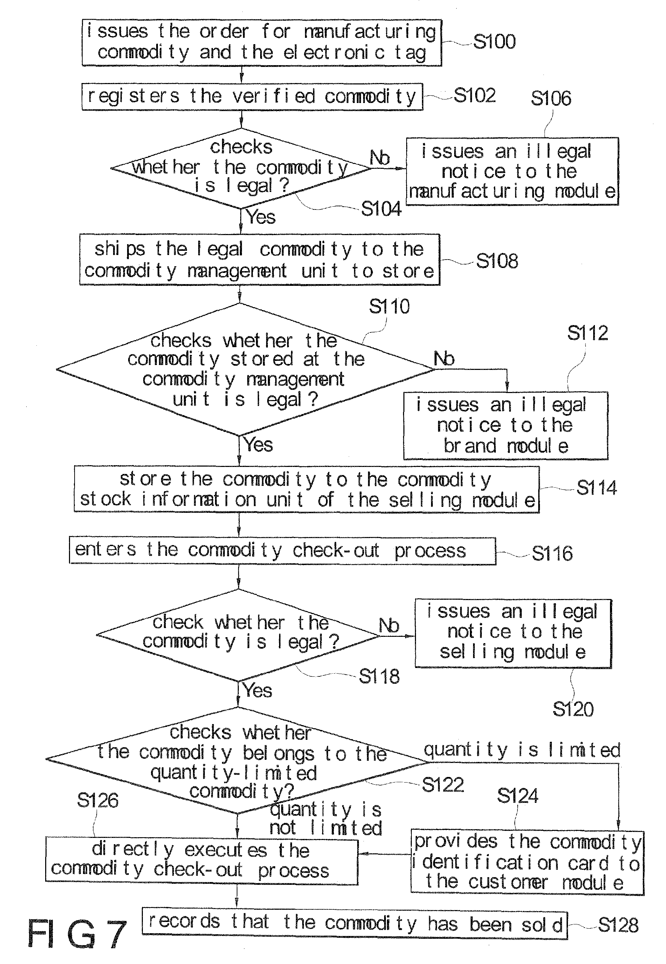

Reference is made to FIG. 7, which shows a flow chart of the counterfeit-impeding method of the commodity logistics service system of the present invention. In order to clearly illustrate the flow chart, reference also is made to FIGs. 1~6.

In FIG. 7, the present invention manages the logistical information of the commodity with an electronic tag via the Internet. The manufacturing management unit 164 of the brand module 16 issues manufacturing orders and the exactly amount of electronic tags 30 described in the manufacturing order to the stock management unit 142 of a manufacturing module 14 (5100). After the manufacturing module 14 receives manufacturing orders from the manufacturing management unit 164, the manufacturing module 14 produces the commodity 3. Each electronic tag 30 of commodity 3 is examined by the quality control unit 140 of the manufacturing module 14 for authorization and registration. The amount of QC passed commodity 3 and information of associated electronic tag 30 are stored in the stock management unit 142 of the manufacturing module 14, and registered in the authorizing and authenticating unit 124 of the authorized module 12 and in the manufacturing management unit 164 of the brand module 16 (S102). When the quantity of registered commodity 3 surpasses the total quantity registration control limit, the commodity 3 cannot be registered. Next, whether the QC passed commodity 3 is legally registered or not is determined (S104). If the commodity 3 is legal, the manufacturing module 14 sends the QC passed commodity 3 to the commodity management unit 162 of the brand module 16 and stores the commodity 3 (S108). If the commodity 3 is illegal, an illegal notice is issued to the manufacturing module 14 (S106).

Whether the commodity 3 stored in the commodity management unit 162 is legally registered or not is checked (S110). If the commodity 3 is legally registered, the commodity 3 is shipped to the commodity stock information unit 190 of the selling module 18, and is registered in the commodity registering unit 184 (S114). If the commodity 3 is not legally registered, an illegal notice is issued to the brand module 16 (S112). Next, a commodity check-out process is executed (S116). When a customer represented by the customer module 20 takes a commodity 3 from the selling module 18, the commodity electronic reading unit 188 sends an inquiry to the commodity registering unit 184 to determine whether the commodity 3 is legally registered or not (S118). If the commodity 3 is not legally registered, an illegal notice is issued to the selling module 18 (S120). If the commodity 3 is legal, the selling module 18 checks whether the commodity 3 taken by the customer module 20 belongs to the quantity-limited commodity or not (S122). If the commodity 3 is a quantity-limited commodity, the verification and service unit 186 of the selling module 18 provides a commodity ID card with a pair of identification information to the customer module (S124). The commodity ID card is provided from the commodity ID card providing unit 174 of the brand module 16. If the commodity 3 is not a quantity-limited commodity, the check-out process is executed (S126). The sales and service unit 182 of the selling module 18 and the sale record unit 168 of the brand module 16 records the commodity 3 as having been sold (S128), and the sale information of the authorizing module 12 is updated.

The present invention utilizes the verifying mechanism of the authorizing and authenticating unit of the authorizing module and the commodity management unit of the brand module of the commodity logistics service system to impede the counterfeiting of a commodity. All commodities are registered in the database of the authorizing module. The commodity management unit of the brand module records the commodity information that the commodity has passed quality examination by the quality control unit of the manufacturing module. Thus, counterfeit commodities are impeded via the verifying algorithms and the multiple commodity recording method.

The description above only illustrates specific embodiments and examples of the invention. The invention should therefore cover various modifications and variations made to the herein-described structure and operations of the invention, provided they fall within the scope of the invention as defined in the following appended claims.

## Claims

1. A commodity logistics service system, that manages logistical information about goods with an electronic tag and impedes counterfeit goods via the Internet, comprising:
an authorizing module having a first accessing control unit, a database unit, and a authorizing and authenticating unit, wherein the database unit stores information of electronic tags of the commodity, account information, registering information, and commodity logistical information, and the authorizing and authenticating unit authorizes and authenticates the commodity and impedes the pirate commodity;
a brand module having a second accessing control unit, a commodity management unit, a manufacturing management unit, a consumer management unit, a sale record unit, and an identification service unit, wherein the information generated from the second accessing control unit, the commodity management unit, the manufacturing management unit and the consumer management unit is a reference for the authorizing and authenticating unit;
a manufacturing module having a quality control unit, and a stock management unit, wherein the manufacturing module receives an order from the manufacturing management unit to produce the commodity, records commodities and get authorization of commodities that have been passed quality examination by the quality control unit in the stock management unit, and registers the QC passed and authorized commodities in the authorizing and authenticating unit and the manufacturing management unit;
a selling module having an Electronic Article Surveillance unit, and a commodity registering unit, wherein the commodity registering unit executes a commodity registering function after a legal commodity is sold; and
a consumer module having an identification service unit to allow consumers to check whether the commodity is legal or not by connecting to the brand module via the Internet.

2. The commodity logistics service system as claimed in claim 1, further comprising a commodity electronic reading unit located at the manufacturing module, the brand module, the selling module, and the customer module for collecting commodity logistical information and sending the commodity logistical information to the authorizing and authenticating unit.

3. The commodity logistics service system as claimed in claim 1, further comprising a return merchandise authorization and reporting unit located at the selling module and the brand module for dealing with the merchandise-return process requested by the customer module.

4. The commodity logistics service system as claimed in claim 1, further comprising a portable electronic device with a legal commodity database for checking whether the commodity stored in the stock management unit of the manufacturing module is legally registered or not.

5. The commodity logistics service system as claimed in claim 1, wherein the customer management unit manages register of the customer and analyzes the sale status of the commodity.

6. The commodity logistics service system as claimed in claim 1, wherein the brand module further comprises an analyzing and reporting unit for analyzing product segmentation, customer group, sales distribution, sales cycle, purchase behavior of consumers, and other sales activities, and for reporting daily sale information of the commodity.

7. The commodity logistics service system as claimed in claim 1, wherein the brand module further comprises a commodity ID card providing unit for generating a commodity ID card with a pair of identification information for the commodity.

8. The commodity logistics service system as claimed in claim 1, wherein the quality control unit comprises a commodity registering device, and a commodity code generator.

9. The commodity logistics service system as claimed in claim 1, wherein the selling module further comprises a verification and service unit for providing a commodity ID card with a pair of identification information to the customer module.

10. The commodity logistics service system as claimed in claim 1, wherein the selling module further comprises a commodity stock information unit for storing information for the authenticated commodity.

11. A counterfeit-impeding method of the commodity logistics service system, that manages the logistics information of goods with an electronic tag via the Internet, comprising:
issuing information of a manufacturing order and electronic tags to a stock management unit of a manufacturing module;
registering the QC passed and authorized commodity in an authorizing and authenticating unit of an authorizing module and a manufacturing management unit of a brand module;
checking whether the QC passed and authenticated commodity is legally registered or not;
shipping and storing the QC passed and authenticated commodity to a commodity management unit of the brand module for storage;
checking whether the commodity stored in the commodity management unit is legally registered or not;
storing the commodity to a commodity stock information unit of a selling module and registering the commodity in the commodity registering unit;
sending an inquiry to determine whether the commodity is legally registered or not;
determining whether the commodity belongs to a quantity-limited commodity or not; and
executing the check-out process.
